# EUROPEAN PATENT APPLICATION

(11) **EP 4 614 001 A1**
(43) Date of publication of application: **10.09.2025**
(21) Application number: 22926436.1
(22) Date of filing: 17.02.2022
(51) Int. Cl.: F03D 9/25

(54) **WIND POWER GENERATION APPARATUS**

(71) Applicant: Lai, Kam Ming, NT Hong Kong 999077 (CN)
(72) Inventor: Lai, Kam Ming, NT Hong Kong 999077 (CN)
(74) Representative: Ipey
(86) International application number: PCT/CN2022/076674
(87) International publication number: WO 2023/155102

(57) **Abstract**

The invention relates to a wind power generation device, which comprises: baffle plates arranged oppositely; a plurality of guide plates arranged between the baffle plates at intervals around a normal center line of the baffle plates; blade disks arranged oppositely, located between the baffle plates and rotatably connected to the baffle plates; and a plurality of blades arranged between the blade disks at intervals around a normal center line of the blade disks, a hollow space being formed by the blade disks and the blades. Fabrication and product costs are reduced. The baffle plates and the blade disks are able to enclose a wind flow entering an inner rotor, so that wind flow is prevented from escaping in a vertical direction. Design parameters are simple and effective, and the wind energy-to-electric energy conversion efficiency is effectively improved.

## Description

### BACKGROUND OF THE INVENTION

### 1. Technical Field

The invention belongs to the technical field of machinery, and more particularly relates to a wind power generation device.

### 2. Description of Related Art

At present, wind power, as a clean energy, has been widely used. There are two types of wind power generators: horizontal-axis wind power generators and vertical-axis wind power generators. In most horizontal-axis wind power generators, to realize a variable pitch during the rotation process of blades, a servo motor is used in the prior art to adjust the pitch angle of the blades through a worm-gear reducer, so as to improve the utilization rate of wind energy. However, with the increase of the number of movable parts, the manufacturing cost will be increased, and a fault is more likely to be generated. The vertical-axis wind power generators adopt fixed blades and a constant configuration to simplify the structure; however, when blades on one side rotate downwind, blades on the opposite side will surface from resistance against wind, which makes the utilization rate of wind energy lower than that of the horizontal-axis wind power generators. However, due to the long movement distance of the axis with respect to the rotor of the horizontal-axis wind power generators and the vertical-axis wind power generators, an excessive load will be generated to the bearing when the generators move, thus damaging the bearing; and both the rotor of the horizontal-axis wind power generators and the rotor of the vertical-axis wind power generators are exposed to the outside, thus posing a high safety risk during operation of the rotors. So, how to increase the utilization rate of wind energy, improve the operating safety of the generators and reduce the wastage of components is an issue to be urgently settled for the design of wind power generation devices.

### BRIEF SUMMARY OF THE INVENTION

To solve the above-mentioned technical problems, the invention provides a wind power generation device to improve the operating safety of the device and reduce the wastage of components.

The purposes and effects of the wind power generation device of the invention are fulfilled through the following specific technical means:
The wind power generation device comprises:
Baffle plates arranged oppositely;
A plurality of guide plates arranged between the baffle plates at intervals around a normal center line of the baffle plates;
Blade disks arranged oppositely, located between the baffle plates and rotatably connected to the baffle plates; and
A plurality of blades arranged between the blade disks at intervals around a normal center line of the blade disks, a hollow space being formed by the blade disks and the blades.

In one embodiment, the blades are disposed on multiple layers, and connecting pieces are arranged between the adjacent layers of blades.

In one embodiment, the blades and the guide plates are in the shape of a curved surface.

In one embodiment, the guide plates or the blades are in the shape of a plane or a cylindrical surface, wherein the cylindrical surface comprises an S-shaped cylindrical surface.

In one embodiment, a diameter of an inscribed circle of the baffle plates is Kl, a hollow radius of a stator is Sd, an arc radius of the guide plates is Rd, and a length of the blades is Rw;
Wherein, Kl > Sd, Sd ≥ Rd, and Rd > Rw.

In one embodiment, 0.1 Kl ≤ Rd ≤ 0.4 Kl.

In one embodiment, 0.3Kl≤ Sd ≤ 1 Kl.

In one embodiment, 0.09 Kl ≤ Rw ≤ 1 Kl.

In one embodiment, an arc radius of the blades is Ra, wherein 0.11 Kl ≤ Ra ≤ 0.26 Kl.

In one embodiment, a deflection angle of the blades with respect to the center of the baffle plates is Rg, wherein 8° ≤ Rg ≤ 28°; and a deflection angle of the guide plates with respect to the center of the baffle plates is Sg, wherein 1° ≤ Sg ≤ 27°.

In one embodiment, a shape space is formed in the baffle plates and the guide plates, and the shape space is a cylinder space, a frustum space or a cone space.

In one embodiment, the blades on at least part of all the layers are arranged in a staggered manner.

In one embodiment, multiple sets of blade disks and blades are arranged.

The invention has at least the following beneficial effects:
In the invention, the plurality of guide plates are arranged between the baffle plates in a surrounding manner, with the normal center line of the baffle plates 1 as a center, so that all air flows entering the device will be guided into a direction beneficial to the rotation of the rotor, and the rotor will not suffer from resistance against wind when rotating in a direction against the wind; the shape space is formed in the baffle plates and the guide plates; the blade disks are located between the baffle plates, the plurality of blades are arranged between the blade disks in a surrounding manner, with the normal center line of the blade disks as a center, a hollow space is formed in the blade disks at the two ends and the blades; and an air flow entering a stator can enter the hollow space to drive the rotor twice or more times, so that wind energy is better used, and an air vortex beneficial to the rotation of the rotor is formed in the hollow space. The inner rotor and the stator may be connected in various manners to form the hollow space inside, so that fabrication and product costs are reduced, the rotor can rotate more stably, and bearing wear is reduced; the baffle plates and the blade disks can enclose a wind force entering the inner rotor, so that the wind force is prevented from escaping in a vertical direction; and the design parameters are simple and effective, and the wind energy-to-electric energy conversion efficiency is effectively improved.

### BRIEF DESCRIPTION OF THE SEVERAL VIEWS OF THE DRAWINGS

The above and other purposes, features and advantages of illustrative embodiments of the disclosure will be easily understood by reading the following detailed description with reference to accompanying drawings. In the drawings, a plurality of embodiments of the disclosure are shown illustratively rather than restrictively, and identical or corresponding reference signs represent identical or corresponding parts, wherein:
FIG. 1 is a structural diagram of a wind power generation device of the invention.
FIG. 2 is a structural diagram of a wind power generation device of the invention.
FIG. 3 is a structural diagram of a wind power generation device of the invention.
FIG. 4 is a structural diagram of a wind power generation device of the invention.
FIG. 5 is a structural diagram of a wind power generation device of the invention.
FIG. 6 is a structural diagram of a wind power generation device of the invention.
FIG. 7 is a structural diagram of a wind power generation device of the invention.
FIG. 8 is a size design diagram of a wind power generation device of the invention.
FIG. 9 is a size design diagram of a wind power generation device of the invention.
FIG. 10 is a size design diagram of a wind power generation device of the invention.
FIG. 11 is a size design diagram of a wind power generation device of the invention.
FIG. 12 is a size design diagram of a wind power generation device of the invention.
FIG. 13 is a size design diagram of a wind power generation device of the invention.
FIG. 14 is a size design diagram of a wind power generation device of the invention.
FIG. 15 is a schematic diagram of the flow direction of a wind flow of a wind power generation device of the invention.

Corresponding relations between components and reference signs in the figures:
1, Baffle plate; 2, guide plate; 3, blade disk; 4, blade; 5, stator; 6, inner rotor.

### DETAILED DESCRIPTION OF THE INVENTION

The technical solutions of the embodiments of the disclosure will be clearly and completely described below in conjunction with the accompanying drawings of the embodiments. Obviously, the embodiments in the following description are merely illustrative ones, and are not all possible ones of the disclosure. All other embodiments obtained by those skilled in the art based on the following ones without creative labor should also fall within the protection scope of the disclosure.

Specific implementations of the disclosure will be described in detail below in conjunction with the accompanying drawings.

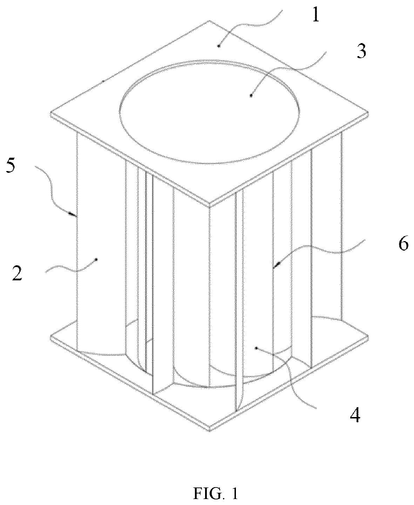

Referring to FIG. 1 which illustrates a structural diagram of a wind power generation device, the wind power generation device comprises baffle plates 1, a plurality of guide plates 2, blade disks 3 and a plurality of blades 4.

Specifically, the baffle plates 1 are oppositely arranged at two ends of the plurality of guide plates 2 respectively, and the plurality of guide plates 2 are arranged between the baffle plates 1 at intervals, with a normal center line of the baffle plates 1 as a center; and a shape space is formed by the baffle plates 1 at the two ends of the guide plates 2 and the guide plates 2 between the baffle plates 1.

Further, the blade disks 3 are oppositely arranged at upper and lower ends of the shape space respectively, that is, the blade disks 3 are located between the baffle plates 1 and are rotatably connected to the baffle plates 1.

The plurality of blades 4 are arranged between the blade disks 3 at intervals, with a normal center line of the blade disks 3 as a center; and a hollow space is formed in the blade disks 3 at the two ends and the blades 4.

It should be noted that the plurality of guide plates 2 are arranged on the baffle plates 1 at equal or unequal intervals, and similarly, the plurality of blades 4 are arranged on the blade disks 3 at equal or unequal intervals. The invention will not set too many limitations in this aspect. In actual application, the guide plates 2 may be connected to the baffle plates 1 at the upper and lower ends by welding; or, the plurality of guide plates 2 and the baffle plates 1 may be integrally fabricated by casting, sheet metal machining, or stamping. In this embodiment, the baffle plates 1 at the upper and lower ends and the plurality of guide plates 2 constitute a stator 5 of the wind power generation device; and the blade disks 3 at the upper and lower ends and the plurality of blades 4 between the blade disks 3 constitute an inner rotor 6 of the wind power generation device. Wherein, the shape space may be a space in difference shapes such as a cylinder space, a frustum space or a cone space to allow the inner rotor 6 in different shapes to be received therein.

The guide plates 2 are ventilative grid plates to guide wind into the inner rotor 6 and to guide the wind out after the wind pushes the inner rotor 6 to rotate.

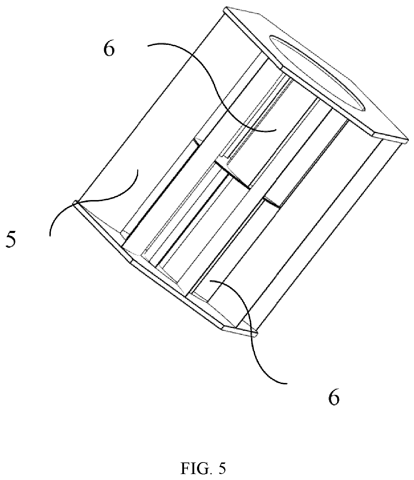

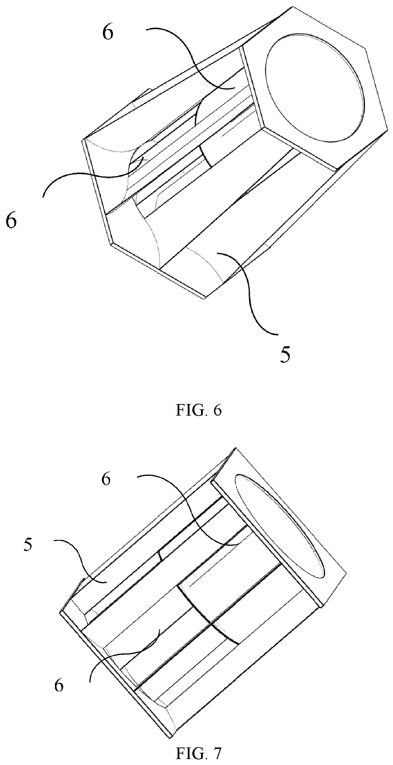

The baffle plates 1 are horizontal shields for sealing upper and lower ends of the stator 5, are used to enclose a wind flow entering the stator 5. The baffle plates 1 are able to completely enclose the wind flow in a vertical direction so as to prevent the wind flow from escaping in the vertical direction, thus effectively improving the conversion efficiency of wind energy. As shown in FIG. 1 to FIG. 6, a solution of the totally-enclosed baffle plates as follows: the baffle plates 1 are enclosed through the blade disks 3. Specifically, limit grooves (not shown) are formed in the baffle plates, and the blade disks are disposed in the limit grooves and are able to rotate in the limit grooves, so that the structure in this embodiment is compact; and the blade disks 3 and the baffle plates 1 are combined and assembled together, so that the stator is sealed in the vertical direction. Obviously, this is only an example of the invention, and the totally-enclosed baffle plates 1 may be implemented in many other ways. For example, each baffle plate 1 is designed into a complete and integrated plane to fulfill the technical effect of preventing the wind flow from escaping in the vertical direction. The invention will not set too many limitations to the totally-enclosed arrangement of the baffle plates 1. As shown in FIG. 1, in one embodiment, the baffle plates 1 are square, and the entire wind power device is quadrangular accordingly, so that wind flows can be collected in all directions to the maximum extent. Thus, the mounting position of the wind power generation device in this embodiment does not need to be adjusted according to the wind direction, and the applicability of the wind power generation device is better.

The guide plates 2 are in the shape of a liner plane or a cylindrical surface, wherein the cylindrical surface is a curved surface formed by parallelly shifting a straight line along a fixed curve, or is a cylindrical surface formed by connecting multiple straight lines, namely a curved surface formed by parallelly shifting a movable straight line along a fixed curve. The cylindrical surface may comprise an S-shaped cylindrical surface. The guide plates 2 may also be in other shapes allowing wind to be guided in easily, and the invention will not set too many limitations in this aspect. The number of the guide plates 2 is generally three or more, those skilled in the art may set the number of the guide plates 2 as the case may be, and the invention will not set too many limitations in this aspect.

The blades 4 serve as ventilative grid plates of the inner rotor 6, are perpendicular to the two blade disks 3 that are arranged oppositely, and are arranged between the blade disks 3 at intervals around a normal center line of the blade disks 3.

In actual application, the blades 4 in the inner rotor 6 may also be in the shape of a linear plane or a cylindrical surface, wherein the cylindrical surface may comprise an S-shaped cylindrical surface. The blades 4 may also be in other shapes allowing wind to be guided in easily, and the invention will not set too many limitations in this aspect. The number of the blades 4 may be three or more, those skilled in the art may set the number of the blades 4 as the case may be, such as four or five, and the invention will not set too many limitations in this aspect.

Similar to the effect of the baffle plates 1, the blade disks 3 are a set of horizontal shields for sealing the inner rotor 6 and are used for enclosing a wind flow entering the inner rotor 6, and the blade disks 3 are not provided with hollow parts to prevent the wind flow from escaping in the vertical direction, so that the conversion efficiency of wind energy is effectively improved. As for the size of the blade disks 3, those skilled in the art may set the size of the blade disks 3 freely as the case may be, and the invention will not set too many limitations in this aspect. Further, the blades 4 may be connected to the blade disks 3 at the upper and lower ends by welding. Or, the plurality of blades 4 and the blade disks 3 may be fabricated integrally by casting. Or, the stator 5 may be fabricated by sheet metal machining, stamping or riveting.

The inner rotor 6 and the stator 5 may be connected through movable screws. That is, through holes are formed in the center of the blade disks 3 and in the center of the baffle plates 1, and the movable screws are disposed in the through holes to connect the inner rotor 6 and the stator 5, so that the inner rotor 6 is able to rotate freely; and a hollow space is formed in the inner rotor 6, so that fabrication and product costs are reduced, and the conversion efficiency of wind energy is improved.

Of course, the inner rotor 6 and the stator 5 may be connected in other manners. For example, the inner rotor 6 and the stator 5 may be connected through bolts and nuts, or through a rotating shaft, a limit lever or a bearing. The invention will not set too many limitations in this aspect.

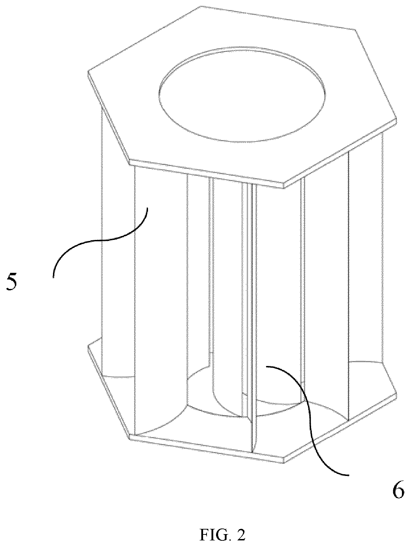

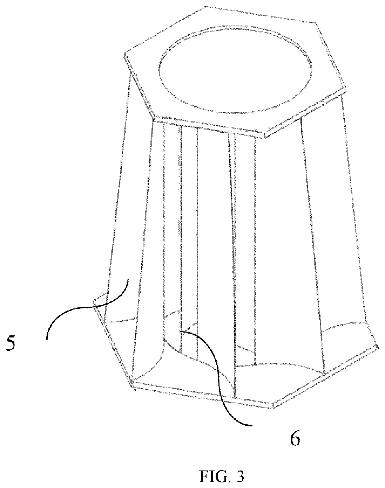

Referring to FIG. 2 and FIG. 3 which illustrate structural diagrams of a wind power generation device, the baffle plates 1 and the guide plates 2 constitute a stator 5 for fixing the wind power generation device, a generator may be disposed below the stator 5, and a mesh grid or a net may be additionally disposed around the stator 5, so that large foreign matter is prevented from entering the stator under the precondition that the efficiency is not compromised, and creatures will not touch the stator, which may otherwise cause dangers. A wind flow enters the space between the guide plates 2 of the stator 5, is accelerated to impact or squeeze the blades 4 to drive the inner rotor 6 to rotate to obtain rotational energy, and power is generated after the inner rotor is connected to the generator, so that the rotational energy is converted into electric energy.

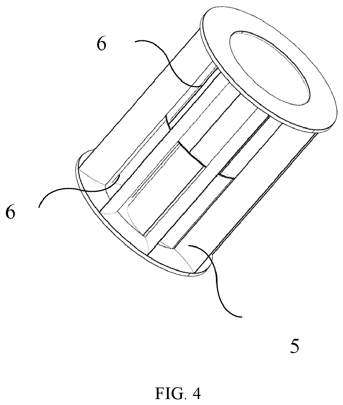

**In** a preferred embodiment, referring to FIG. 4 to FIG. 7 which illustrate structural diagrams of a wind power generation device, the number of the inner rotors 6 may be multiple, that is, two or more inner rotors 6 may be disposed in the shape space such as a cylinder space. **In** this case, the blades 4 are arranged on multiple layers, and connecting pieces are arranged between the adjacent layers of blades 4. The connecting pieces comprise multiple types of connecting pieces such as various plates, and the invention will not set too many limitations in this aspect. As for the multi-layer arrangement of the blades 4, as shown in FIG. 4-FIG. 7, all the layers of blades 4 are arranged in the vertical direction, for example, the first layer of blades is located above, and the second layer of blades is located below. The number of the layers of blades 4 may be set as any value by those skilled in the art as the case may be. For example, four or five layers of blades are arranged in the vertical direction. The invention will not set too many limitations in this aspect. **In** this case, the multiple inner rotors 6 are arranged in the vertical direction.

**In** another aspect, the multi-layer arrangement of the blades 4 may also be implemented in such a manner that multiple layers of blades 4 are distributed according to concentric circles, the blades 4 on each layer are disposed from inside to outside or from outside to inside around the same center, so that the multiple layers of blades 4 are nested.

To make a better use of wind energy and improve the conversion efficiency of the wind energy, the blades 4 on at least part of all the layers arranged in a staggered manner.

In this embodiment, multiple sets of blade disks may be arranged oppositely, and the blade disks and the plurality of blades between the blade disks constitute inner rotors. That is, the number of the inner rotors may be multiple, in this embodiment.

It should be noted that in case of only one inner rotor 6, the conversion efficiency is the highest, and the air flow receiving area is the largest.

It should be noted that the shape of the baffle plates 1 and the plurality of guide plates 2 may be changed as the case may be. For example, when the stator 5 is in the shape of a frustum, the baffle plates 1 may be in the shape of a corresponding polygon, and the guide plates 2 may be in the shape of a trapezoid.

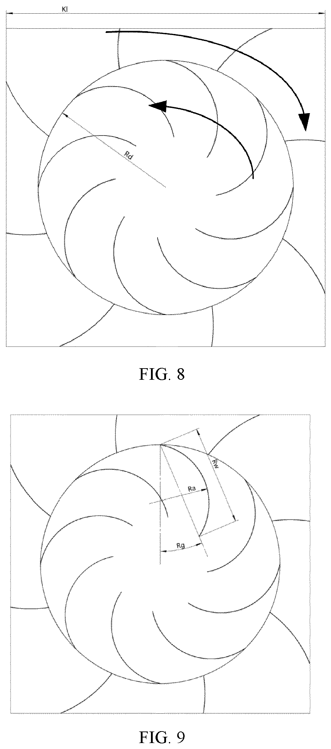

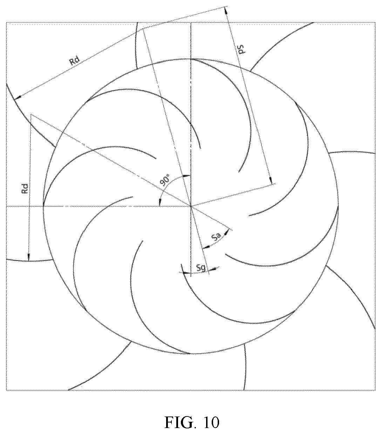

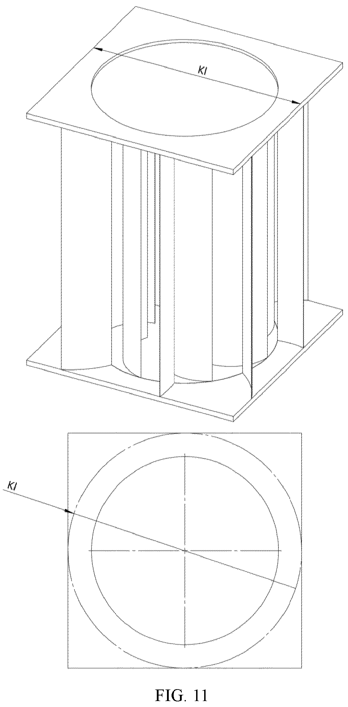

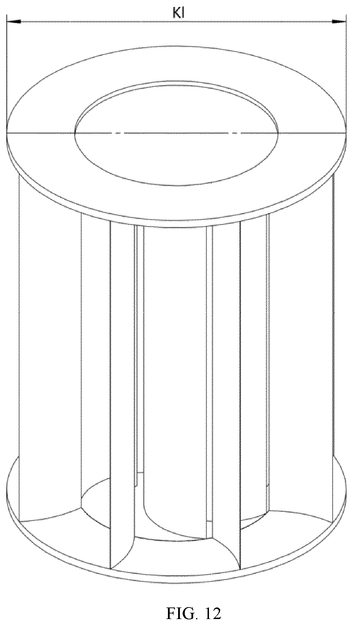

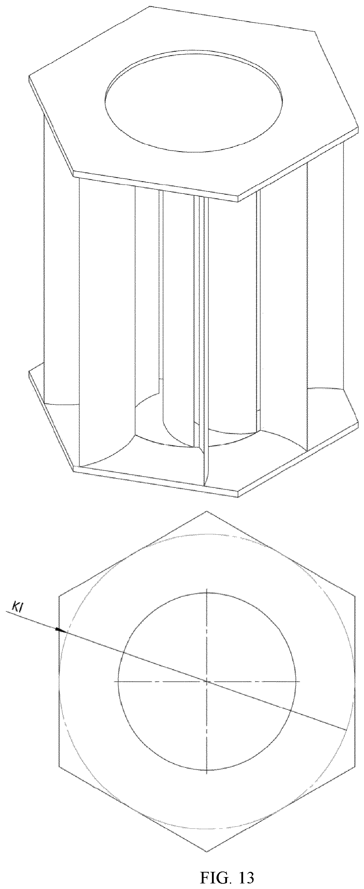

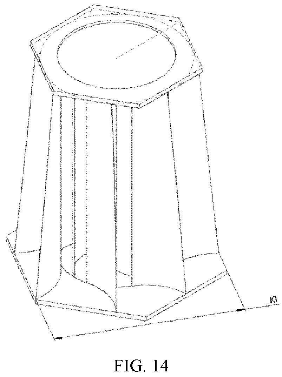

Referring to FIG. 8 - FIG. 14 which illustrate size design diagrams of a wind power generation device, in this embodiment, Kl is the diameter of an inscribed circle of the baffle plates, Sg is a deflection angle of the guide plates with respect to the center of the baffle plates, Rg is a deflection angle of the blades with respect to the center of the baffle plates, Ra is the arc radius of the blades, Rw is the length of the blades, Rd is the arc radius of the guide plates, and Sd is the hollow radius of the stator.

The relationship of the design parameters of the wind power generation device in this embodiment is as follows: Kl >Sd ≥ Rd > Rw. That is, the diameter Kl of the inscribed circle of the baffle plates is greater than the hollow radius Sd of the stator, the hollow radius Sd of the stator is greater than or equal to the arc radius Rd of the guide plates, and the arc radius Rd of the guide plates is greater than the length Rw of the blades.

Further, the arc radius Rd of the guide plates is approximately equal to Kl * (2.5 ± 1.5) / 10; the arc radius Rd of the guide plates may be a value from 0.2 Kl to 0.4 Kl; and preferably, the arc radius Rd of the guide plates may also be a value from 0.1 Kl to 0.4 Kl, that is, 0.1 Kl ≤ Rd ≤ 0.4 Kl.

In one embodiment, the hollow radius Sd of the stator is approximately equal to Kl * (7 ± 4) / 10; the hollow radius Sd of the stator may be a value from 0.3 Kl to 1.1 Kl; and preferably, the hollow radius Sd of the stator may be a value from 0.3 Kl to Kl, that is, 0.3 Kl≤ Sd ≤1 Kl.

In addition, the length Rw of the blades is approximately equal to Kl / (6 ± 5), which means that the length Rw of the blades is a value from 0.09 Kl to Kl, that is, 0.09 Kl ≤ Rw ≤ 1 Kl.

In actual application, the arc radius Ra of the blades is approximately equal to Kl / 200 * (37 ± 15), which means that the arc radius Ra of the blades is a value from 0.11 Kl to 0.26 Kl, that is, 0.11 Kl ≤ Ra ≤ 0.26 Kl.

In the aspect of angle design, the deflection angle Rg of the blades with respect to the center of the baffle plates is 18 ± 10°; the deflection angle Sg of the guide plates with respect to the center of the baffle plates is about 14±13°; that is, the deflection angle Rg of the blades with respect to the center of the baffle plates is 8°-28°, 8° ≤ Rg ≤ 28°; and the deflection angle Sg of the guide plates with respect to the center of the baffle plates is 1° - 27°, 1° ≤ Sg ≤ 27°.

In the invention, the blades 4 and the guide plates 2 may be designed into curved surfaces, wherein the curved surfaces may be designed into concave surfaces, and the concave surface (curved surface) of the blades 4 may be opposite to the concave surfaces (curved surfaces) of the guide plates 2 during the rotation process, which is beneficial to the formation of an S-shaped wind flow. The concave surfaces of the blades 4 may be arranged in a direction different from that of the concave surfaces of the guide plates 2. As shown in FIG. 8, the concave surfaces of the blades 4 are arranged anticlockwise, and the concave surfaces of the guide plates 2 are arranged clockwise, which is beneficial to the formation of an S-shaped wind flow.

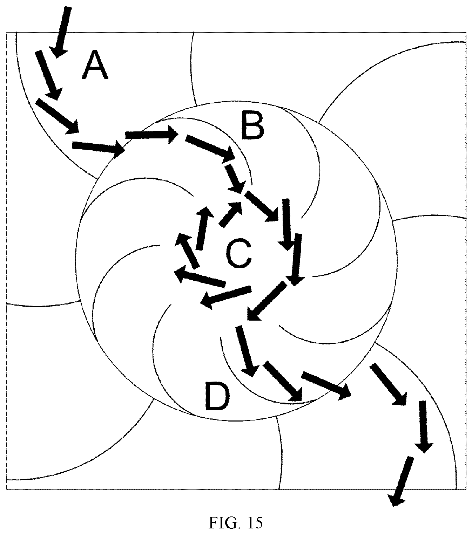

Referring to FIG. 15 which illustrate a schematic diagram of the flow direction of a wind flow of a wind power generation device, in an area A, when the wind flow enters the guide plates 2, the concave surfaces (curved surfaces) of the guide plates 2 face the wind flow, so that the collision between the wind flow and the guide plates 2 is reduced, and the wind flow can be more easily guided to a proper angle by the concave surfaces to push the blades 4. The guide plates 2 are used to guide the wind flow, so that wastage is avoided; and the guide plates 2 are curved surfaces, so that the wind flow can be smoother and steadier and can be accelerated, and noise caused by collision can be reduced.

Further, the wind flow is guided by the concave surfaces of the guide plates 2 to enter an area B to squeeze the blades 4, so as to enable one or more sets of blades 4 to rotate. If the blades 4 are designed into planes, the blades will not be effectively squeezed by the wind flow; the planes may generate resistance against wind when the blades 4 rotate, which is not beneficial to rotation and may waste the kinetic energy of the wind flow. By designing the blades 4 into curved surfaces, the kinetic energy of the wind flow can be used more effectively, and the wind flow can be guided into a direction more favorable for the efficiency after squeezing the blades 4.

After squeezing the blades 4, the wind flow enters an area C which is designed to be hollow, and forms a low-pressure zone and a rotational flow in the area C. The inner rotor 6 is hollow, so that the wind flow will not impact a rotary shaft, and wastage is reduced; the rotational flow is able to drive the blades 4 to rotate, and the low-pressure zone is able to attract more air flows, thus further improving the efficiency. If the area C is not hollow, no rotational flow will be generated, and the wind flow will not drive and squeeze the blades 4 again after passing through the area B and the area C.

In an area D, when the wind flow squeezes the blades 4 and penetrates through the area B and the area C, part of the wind flow forms a rotational flow, and the other part of the wind flow passes through the area C to reach the area D. Thanks to the hollow design of the area C and the design of the curved sides of the blades 4, the wind flow will squeeze the blades 4 again to further improve the rotational energy of the blades 4 and then escape out of the guide plates 2.

The guide plates 2 and the blades 4 are designed into concave surfaces and are opposite to each other, so that the wind flow can be guided into an S-shaped turbulent flow, which forms a rotational flow in the area C. After being guided in this way, the wind flow will not drive the blades 4 by hitting or shearing and will drive the blades 4 to rotate by squeezing, which greatly reduces noise generated when the wind flow passes through the device. In other words, when entering the area A, the wind flow is squeezed and accelerated; after being accelerated, the wind flow squeezes the blades 4; after squeezing the blades 4, the wind flow is guided into the area C to form a rotational flow, which has similar properties to a typhoon, to drives the blades 4 to rotate; when rotating escaping, the rotational flow will escape outwards to squeeze the blades 4 again; in this way, the blades 4 are driven multiple times.

In a preferred embodiment, the guide plates 2 and the blades 4 may be in the shape of a linear column. Compared with a planar design of the guide plates and the blades, the guide plates 2 and blades 4 in the shape of a linear column have higher structural rigidity and remarkably improve the stability of the device under a wind flow; and compared with a vertical planar column, the linear column provides a higher vertical support capacity and saves more structural materials.

In this embodiment, the wind power generation device comprises baffle plates 1, a plurality of guide plates 2, blade disks 3 and a plurality of blades 4, wherein the baffle plates 1 are arranged at upper and lower ends respectively; the plurality of guide plates 2 are arranged between the baffle plates 1 in a surrounding manner, with a normal center line of the baffle plates 1 as a center, so that all air flows entering the device will be guided into a direction beneficial to the rotation of a rotor, and the rotor will not suffer from resistance against wind when rotating in a direction against the wind; and a shape space is formed in the baffle plates 1 at the two ends and the guide plates 2, the blade disks 3 are arranged at upper and lower ends of the shape space respectively, the plurality of blades 4 are arranged between the blade disks 3 in a surrounding manner, with a normal center line of the blade disks 3 as a center, a hollow space is formed in the blade disks 3 at the two ends and the blades 4, and an air flow entering a stator can enter the hollow space to drive the rotor twice or more times, so that wind energy is better used, and an air vortex beneficial to the rotation of the rotor is formed in the hollow space. The inner rotor 6 and the stator 5 may be connected in various manners, and a central shaft is not needed, so that fabrication and product costs are reduced, the rotor can rotate more stably, and bearing wear is reduced; the baffle plates 1 and the blade disks 3 can enclose a wind force entering the inner rotor 6, so that the wind force is prevented from escaping in a vertical direction; and the design parameters are simple and effective, and the wind energy-to-electric energy conversion efficiency is effectively improved.

Unless otherwise expressly stated and defined, terms such as "fix", "mount", "link" and "connect" in the above description of this specification should be broadly understood. For example, the term "connect" may refer to fixed connection, detachable connection or integrated connection; or mechanical connection or electrical connection; or direct connection, or indirect connection via an intermediate medium, or internal communication or interaction of two elements. Thus, unless otherwise clearly defined in this specification, those skilled in the art may understand the specific meaning of these terms in the invention as the case may be.

**In** terms of the above description in this specification, those skilled in the art may understand that terms "upper", "lower", "front", "back", "left", "right", "length", "width", "thickness", "vertical", "horizontal", "top", "bottom", "inner", "outer", "axial", "radial", "circumferential", "center:, "lengthwise", "crosswise", "clockwise" and "anticlockwise" are used to indicate directional or positional relations based on the accompanying drawings in this specification merely for the purpose of explaining the solutions of the invention and simplifying the description, and do not explicitly or implicitly indicate that devices or elements referred to must have a specific direction or must be configured or operated in a specific direction. Thus, these terms indicating directional or positional relations should not be understood or construed as limiting the solutions of the invention.

**In** addition, terms representing a serial or ordinal number such as "first" and "second" in this specification are merely for the purpose of description, and should not be understood as explicitly or implicitly indicating relative importance or implicitly indicating the number of technical features referred to. Thus, a feature defined by "first" or "second" may explicitly or implicitly indicate the inclusion of at least one said feature. Unless otherwise clearly and specifically defined, "multiple" means at least two such as two, three or more, in the description of this specification.

Although multiple embodiments of the invention have been illustrated and described in this specification, it is obvious for those skilled in the art that these embodiments are provided by way of examples. Those skilled in the art may think of many modifications, changes and substitutions without departing from the concept and sprit of the invention. It should be understood that various substitutive solutions of the invention described in this specification may be adopted when the invention is implemented. The appended claims are intended to define the protection scope of the invention, and thus cover modular composition and equivalent or substitutive solutions within the scope of these claims.

## Claims

1. A wind power generation device, comprising:
baffle plates arranged oppositely;
a plurality of guide plates arranged between the baffle plates at intervals around a normal center line of the baffle plates;
blade disks arranged oppositely, located between the baffle plates and rotatably connected to the baffle plates; and
a plurality of blades arranged between the blade disks at intervals around a normal center line of the blade disks, a hollow space being formed by the blade disks and the blades.

2. The wind power generation device according to Claim 1, wherein the blades are disposed on multiple layers, and connecting pieces are arranged between the adjacent layers of blades.

3. The wind power generation device according to Claim 1, wherein the blades and guide plates are in the shape of a curved surface.

4. The wind power generation device according to any one of Claims 1-3, wherein the guide plates or the blades are in the shape of a plane or a cylindrical surface, wherein the cylindrical surface comprises an S-shaped cylindrical surface.

5. The wind power generation device according to Claim 2, wherein a diameter of an inscribed circle of the baffle plates is Kl, a hollow radius of a stator is Sd, an arc radius of the guide plates is Rd, and a length of the blades is Rw;
wherein, Kl > Sd, Sd ≥ Rd, and Rd > Rw.

6. The wind power generation device according to Claim 5, wherein 0.1 Kl ≤ Rd ≤ 0.4 Kl.

7. The wind power generation device according to Claim 5, wherein 0.3 Kl≤ Sd ≤1 Kl.

8. The wind power generation device according to Claim 5, wherein 0.09 Kl≤ Rw ≤1 Kl.

9. The wind power generation device according to any one of Claims 1-3 and 5-8, wherein an arc radius of the blades is Ra, wherein 0.11 Kl≤ Ra ≤ 0.26 Kl.

10. The wind power generation device according to Claims 2-3 and 5-8, wherein a deflection angle of the blades with respect to a center of the baffle plates is Rg, wherein 8° ≤ Rg ≤ 28°; and a deflection angle of the guide plates with respect to the center of the baffle plates is Sg, wherein 1° ≤ Sg ≤ 27°.

11. The wind power generation device according to Claim 1, wherein a shape space is formed in the baffle plates and the guide plates, and the shape space is a cylinder space, a frustum space or a cone space.

12. The wind power generation device according to Claim 2, wherein the blades on at least part of all the layers are arranged in a staggered manner.

13. The wind power generation device according to Claim 12, wherein multiple sets of said blade disks are arranged oppositely.
